# EUROPÄISCHE PATENTANMELDUNG

(11) **EP 1 887 293 A2**
(43) Veröffentlichungstag der Anmeldung: **13.02.2008**
(21) Anmeldenummer: 07015052.9
(22) Anmeldetag: 01.08.2007
(51) Int. Cl.: F24J 2/46, F24J 2/48

(54) **Absorber, Vorrichtung zur Herstellung eines Absorbers und Verfahren zur Herstellung eines Absorbers**

(30) Priorität: 11.08.2006 DE 102006037872
(71) Anmelder: Viessmann Werke GmbH & Co. KG, 35107 Allendorf (DE)
(72) Erfinder: Gantenbein, Paul, 8049 Zürich (CH); Frenck, Hubert, 66130 Saarbrücken (DE); Florent, Bernardo, 57470 Hombourg-Haut (FR); Vigneron, Marc, 57157 Marly (FR)
(74) Vertreter: Wolf, Michael

(57) **Zusammenfassung**

Die Erfindung betrifft einen Absorber, umfassend ein mit einer optisch selektiven Beschichtung (2) versehenes Trägerelement (1), wobei die eine bestimmte Schichtdicke (d) aufweisende Beschichtung (2) aus einem metallischen Anteil und einem Anteil aus mindestens einem niedermolekularen Element oder einer niedermolekularen Verbindung besteht, wobei das Konzentrationsverhältnis der beiden Anteile zueinander zur Einstellung der optischen Brechzahl n im Verlauf der Schichtdicke (d) variiert. Die Erfindung betrifft ferner Vorrichtung und ein Verfahren zur Herstellung des genannten Absorbers. Nach der Erfindung ist bezüglich des Absorbers vorgesehen, dass die Beschichtung (2) trägerelementabgewandt mit einer zusätzlichen, eine Brechzahl 1 < n < 1,6 aufweisenden Oberflächenschicht (3) versehen ist.

## Beschreibung

Die Erfindung betrifft einen Absorber gemäß dem Oberbegriff des Patentanspruchs 1, eine Vorrichtung zur Herstellung eines Absorbers gemäß dem Oberbegriffs des Patentanspruchs 9 sowie ein Verfahren zur Herstellung eines Absorbers gemäß dem Oberbegriff des Patentanspruchs 11.

Ein Absorber der eingangs genannten Art ist insbesondere zum Einbau in einen Sonnenkollektor bestimmt. Dieser besteht aus einem mit einer optisch selektiven Beschichtung versehenen Trägerelement, wobei die eine bestimmte Schichtdicke aufweisende Beschichtung aus einem metallischen Anteil und einem Anteil aus mindestens einem niedermolekularen Element (Sauerstoff, Stickstoff) oder einer niedermolekularen Verbindung (zum Beispiel Kohlenwasserstoff) gebildet ist, wobei das Konzentrationsverhältnis der beiden Anteile zueinander zur Einstellung der optischen Brechzahl im Verlauf der Schichtdicke variiert (sogenannte Gradientenschicht - hierauf wird noch genauer eingegangen). Ein solcher Absorber dient dazu, einfallendes Sonnenlicht zu absorbieren und die dabei anfallende Energiemenge an ein fluides Wärmeträgermedium abzugeben.

Bezüglich der Leistungsfähigkeit eines solchen Absorbers sind insbesondere zwei physikalische Begriffe von Bedeutung:
a) Der sogenannte Absorptionsgrad α: Dieser zeigt an, wie gut der Absorber in der Lage ist, das einfallende Sonnenlicht aufzunehmen. Angestrebt sind natürlich hohe Absorptionsgrade, wobei heutzutage Absorptionsgrade von bis zu 92% tatsächlich erreicht werden.
b) Der sogenannte Emissionsgrad E: Dieser beschreibt, wieviel thermische Strahlung vom Absorber abgegeben wird. Je kleiner der Emissionsgrad ist, desto mehr Energie kann an das fluide Wärmeträgermedium abgegeben werden. Typische Werte des Emissionsgrades betragen heutzutage etwa 5%.

Um einen möglichst hohen Absorptionsgrad α und einen möglichst niedrigen Emissionsgrad ε zu erreichen, sind insbesondere zwei Typen von Absorbern bekannt. Dabei besteht der Absorber zunächst in beiden Fällen aus einem metallischen Trägerelement mit einer optisch selektiven Beschichtung. Das Trägerelement ist zumeist aus Kupferblech gebildet. Der Unterschied zwischen den beiden genannten Typen besteht im wesentlichen in der Beschichtung. Während beim einen Typ eine sogenannte Gradientschicht vorgesehen ist, weist der andere Typ eine sogenannte Indexschicht auf.

Die mechanisch sehr stabile Gradientenschicht ist im Prinzip eine einlagige Schicht mit über der Schichtdicke kontinuierlich variierender Brechzahl n. Die Variation der Brechzahl wird dabei über die Zusammensetzung der Gradientenschicht definiert, wobei diese üblicherweise aus einem metallischen Anteil, z. B. Chrom, und einem Anteil aus einem leichteren Element oder einer niedermolekularen Verbindung, z. B. Kohlenwasserstoff, in amorpher oder fluorierter Form, besteht. Regelmäßig ist der metallische Anteil trägerelementseitig recht hoch, während oberflächenseitig der isolierend wirkende Kohlenwasserstoffanteil (oder auch Sauerstoff- oder Stickstoffanteil) bedeutsamer ist.

Die mechanisch weniger robuste, bezüglich ihrer optischen Eigenschaften an sich aber bessere Indexbeschichtung besteht im Prinzip aus einer Vielzahl unterschiedlicher Einzelschichten mit jeweils definiert festgelegter Brechzahl, wobei die schichtbezogenen Brechzahlen vom Trägerelement (z. B. Kupferblech mit n = 3,5) ausgehend zur äußeren Oberfläche der Beschichtung hin immer kleiner werden.

In der den Stand der Technik bildenden EP 0 736 612 B1 ist die Gradientenschicht beschrieben, von der im Folgenden ausgegangen wird.

Der Erfindung liegt von diesem Stand der Technik ausgehend die Aufgabe zugrunde, erstens einen Absorber mit höherem Absorptionsgrad α und niedrigerem Emissionsgrad ε bereit zu stellen, zweitens eine Vorrichtung zur Herstellung eines solchen Absorbers zu schaffen und drittens ein Verfahren zur Herstellung eines solchen Absorbers anzugeben.

Diese Aufgabe ist gegenständlich mit einem Absorber gemäß den kennzeichnenden Merkmalen des Patentanspruchs 1 gelöst. Vorrichtungsmäßig lösen die kennzeichnenden Merkmale des Patentanspruchs 9 die gestellte Aufgabe. Die kennzeichnenden Merkmale des Patentanspruchs 11 lösen die Aufgabe schließlich verfahrensmäßig.

Nach der Erfindung ist also vorgesehen, dass die Beschichtung trägerelementabgewandt mit einer zusätzlichen, eine Brechzahl 1 < n < 1,6 aufweisenden Oberflächenschicht versehen ist.

Mit anderen Worten ausgedrückt, wird erfindungsgemäß auf die Gradientenschicht eine zusätzliche Oberflächenschicht aufgebracht, die eine luftähnliche Brechzahl (Luft hat etwa die Brechzahl n = 1) aufweist, so dass optische Verluste an der Oberfläche des Absorbers möglichst gering gehalten werden können. Diese Angleichung der Brechzahl der Oberflächenschicht an die Brechzahl der Umgebung führt, wie Experimente ergeben haben, zu einem Absorptionsgrad von etwa 94% und zu einem Emissionsgrad von etwa 3%, mithin also eine deutliche Steigerung im Vergleich zum bekannten Stand der Technik.

Wesentlich ist dabei, dass die Oberflächenschicht aus Materialien besteht, die in der Gradientenschicht nicht enthalten sind, so dass letztlich eine Kombination aus einer Gradienten- und einer Indexschicht entsteht. Als Material für die Oberflächen- bzw. Indexschicht ist dabei bevorzugt Siliziumoxid (SiO₂) mit einer Brechzahl von n ~ 1,46 vorgesehen. In Betracht kommen aber auch Materialien wie Cerfluorid (CeF) oder Magnesiumdifluorid (MgF₂). Entscheidend ist, dass die Oberflächenschicht nicht durch Elemente wie Kohlenstoff "verunreinigt" wird, da solche Materialien zu einer Erhöhung der Brechzahl und damit zu einer unerwünschten Vergrößerung der Reflexion an der Grenzfläche zwischen Umgebungsluft und Oberfläche der Beschichtung führen.

Andere vorteilhafte Weiterbildungen ergeben sich aus den abhängigen Patentansprüchen.

Der erfindungsgemäße Absorber, die Vorrichtung zur Herstellung dieses Absorbers sowie das Verfahren zu seiner Herstellung werden nachfolgend anhand der zeichnerischen Darstellung eines bevorzugten Ausführungsbeispiels näher erläutert.

Es zeigt
- Figur 1: schematisch im Schnitt den Aufbau eines Sonnenkollektors;
- Figur 2: schematisch im Schnitt den Schichtaufbau des erfindungsgemäßen Absorbers; und
- Figur 3: in Seitenansicht eine Bandbeschichtungsanlage zur Herstellung des erfindungsgemäßen Absorbers.

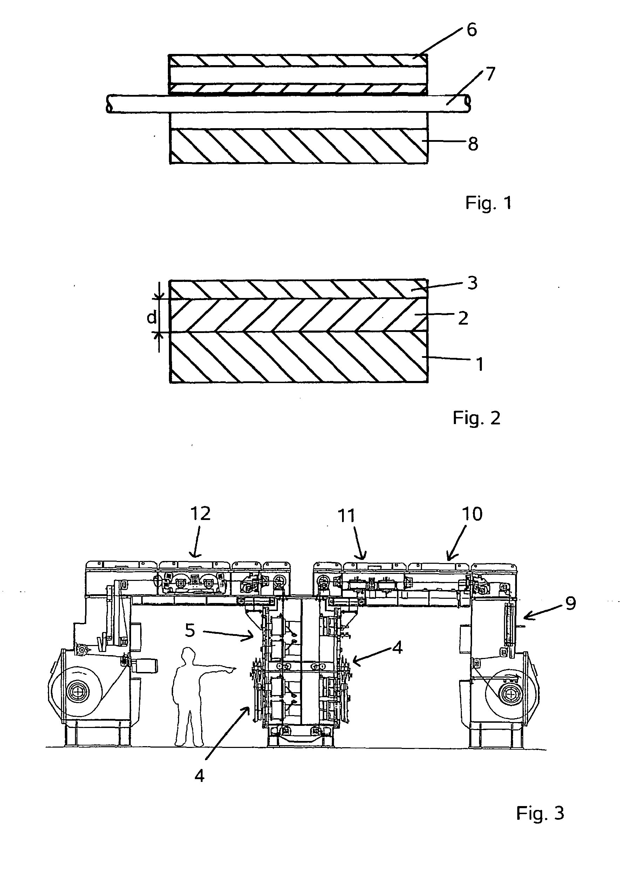

In Figur 1 ist zunächst der allgemeine, an sich bekannte Aufbau eines Sonnenkollektors schematisch (nicht maßstäblich) dargestellt. Von oben nach unten sind folgende Bauteile vorgesehen: eine eisenarme Glasplatte 6, der Absorber selbst, darunter eine Rohrleitung 7 für ein Wärmeträgerfluid (regelmäßig mit einem Frostschutzmittel versetzt) und schließlich eine Isolation 8.

Der in Figur 2 (nicht maßstäblich) dargestellte Absorber besteht aus einem mit einer optisch selektiven Beschichtung 2 versehenen Trägerelement 1, wobei die eine bestimmte Schichtdicke d aufweisende Beschichtung 2 aus einem metallischen Anteil und einem Anteil aus mindestens einem niedermolekularen Element bzw. einer niedermolekularen Verbindung besteht, wobei das Konzentrationsverhältnis der beiden Anteile zueinander zur Einstellung der optischen Brechzahl n im Verlauf der Schichtdicke d variiert.

Bei der dargestellten, bevorzugten Ausführungsform ist das Trägerelement 1 aus Kupferblech gebildet und weist eine Dicke von 0,2 mm auf. Der metallische Anteil der aufgebrachten Beschichtung 2, die typischer Weise eine Schichtdicke d von etwa 80 nm bis 140 nm, vorzugsweise 120 nm, aufweist, ist aus Chrom gebildet; als niedermolekulare Verbindung wird Kohlenwasserstoff verwendet, so dass die Beschichtung 2 im weiteren Sinne als metallkeramische Gradientenschicht ausgebildet ist. Die solarselektiven Eigenschaften der Beschichtung 2 ergeben sich durch Variation des Verhältnisses dieser beiden Komponenten über die Schichtdicke d. Bei einer bevorzugten Ausführungsform beträgt der Chromgehalt beispielsweise zwischen 15 % und 50 %, was Brechzahlen n zwischen 3,5 und 2,1 im Verlauf der Schichtdicke d zur Folge hat.

Alternativ können auch metallische Anteile aus Molybdän oder Titan in Kombination mit niedermolekularen Elementen wie Sauerstoff oder Stickstoff vorgesehen sein.

Wesentlich für den erfindungsgemäßen Absorber ist nun mit nochmaligem Verweis auf Figur 2, dass zur Verminderung optischer Verluste an der Oberfläche des Absorbers die Beschichtung 2 trägerelementabgewandt mit einer zusätzlichen, eine Brechzahl 1 < n < 1,6 aufweisenden Oberflächenschicht 3 versehen ist.

Bei der dargestellten, bevorzugten Ausführungsform ist diese Oberflächenschicht 3 aus Siliziumoxid mit einer Brechzahl n von etwa 1,5 gebildet. Die Dicke dieser Oberflächenschicht beträgt etwa 50 nm bis 70nm, vorzugsweise 60nm. Alternativ kommen auch Cerfluorid, Magnesiumdifluorid oder andere geeignete Materialien mit niedriger Brechzahl in Betracht.

In Figur 3 ist schließlich die Vorrichtung zur Herstellung des erfindungsgemäßen Absorbers dargestellt. Diese besteht zunächst in bekannter Weise aus mindestens einem sogenannten Bandbeschichtungsabschnitt 4 zum Aufbringen einer optisch selektiven Beschichtung 2 mit einer über der Schichtdicke d variierenden Brechzahl n auf ein Trägerelement 1.

Das Trägerelement 1 (wie erwähnt, vorzugsweise ein Kupferblech) wird dabei (siehe rechts in Figur 3) von einem Coil abgewickelt und durchläuft im ersten brückenartigen Teilbereich der Bandbeschichtungsanlage in an sich bekannter Weise zunächst eine Reinigungsstation 9, eine Kühlstation 10 und dann noch eine Aktivierungsstation 11.

Im mittleren Teil der Bandbeschichtungsanlage ist dann in Bezug auf die Durchlaufsrichtung des Trägerelements 1 als nächstes der bereits erwähnte Bandbeschichtungsabschnitt 4 zur Aufbringung der Beschichtung 2 vorgesehen. Die Aufbringung dieser Gradientenschicht erfolgt beim dargestellten Ausführungsbeispiel im Rahmen einer sogenannten, an sich bekannten physikalische Gasphasenabscheidung.

Vorrichtungsmäßig ist nun wesentlich, dass dem Bandbeschichtungserabschnitt 4 ein weiterer Bandbeschichtungsabschnitt 5 zum Aufbringen einer Oberflächenschicht 3 mit einer Brechzahl 1 < n < 1,6 auf die Beschichtung 2 nachgeschaltet ist. Dabei sind, damit es nicht zu einer Vermischung der Gradienten- und Indexschicht kommt, die beiden Bandbeschichtungsabschnitte 4, 5 in voneinander hermetisch getrennten Kammern angeordnet.

An den erfindungsgemäßen Bandbeschichtungsabschnitt 5 schließt sich dann noch in an sich bekannter Weise u. a. eine weitere Kühlstation 12 und die Wickelmechanik für das erfindungsgemäß ausgebildete Absorberblech an.

Verfahrensmäßig betrachtet, wird also zunächst in mindestens einem Verfahrensabschnitt auf ein Trägerelement 1 eine optisch selektive Beschichtung 2 mit über der Schichtdicke d variierender Brechzahl n aufgebracht. In einem für die Erfindung wesentlichen, weiteren, nachfolgenden Verfahrensabschnitt wird dann, wie erläutert, auf die optisch selektive Beschichtung 2 eine zusätzliche Oberflächenschicht 3 mit einer Brechzahl 1 < n < 1,6 aufgebracht.

### Bezugszeichenliste

- 1: Trägerelement
- 2: Beschichtung
- 3: Oberflächenschicht
- 4: Bandbeschichtungsabschnitt für die Beschichtung
- 5: Bandbeschichtungsabschnitt für die Oberflächenschicht
- 6: Glasplatte
- 7: Rohrleitung
- 8: Isolation
- 9: Reinigungsstation
- 10: Kühlstation
- 11: Aktivierungsstation
- 12: Kühlstation

- d: Schichtdicke der Beschichtung

## Patentansprüche

1. Absorber, umfassend ein mit einer optisch selektiven Beschichtung (2) versehenes Trägerelement (1), wobei die eine bestimmte Schichtdicke (d) aufweisende Beschichtung (2) aus einem metallischen Anteil und einem Anteil aus mindestens einem niedermolekularen Element oder einer niedermolekularen Verbindung besteht, wobei das Konzentrationsverhältnis der beiden Anteile zueinander zur Einstellung der optischen Brechzahl n im Verlauf der Schichtdicke (d) variiert,
**dadurch gekennzeichnet,**
**dass** die Beschichtung (2) trägerelementabgewandt mit einer zusätzlichen, eine Brechzahl 1 < n < 1,6 aufweisenden Oberflächenschicht (3) versehen ist.

2. Absorber nach Anspruch 1, wobei die Beschichtung (2) als Gradientenschicht ausgebildet ist,
**dadurch gekennzeichnet,**
**dass** die Oberflächenschicht (3) aus anderen chemischen Elementen als die Beschichtung (2) ausgebildet ist.

3. Absorber nach Anspruch 1 oder 2,
**dadurch gekennzeichnet,**
**dass** die Oberflächenschicht (3) vorzugsweise aus Siliziumoxid, alternativ aus Cerfluorid oder Magnesiumdifluorid gebildet ist.

4. Absorber nach einem der Ansprüche 1 bis 3,
**dadurch gekennzeichnet,**
**dass** das Trägerelement (1) aus Kupferblech, vorzugsweise mit einer Dicke von 0,2 mm, besteht.

5. Absorber nach einem der Ansprüche 1 bis 4,
**dadurch gekennzeichnet,**
**dass** der metallische Anteil der Beschichtung (2) vorzugsweise aus Chrom, alternativ aus Molybdän oder Titan, besteht.

6. Absorber nach einem der Ansprüche 1 bis 5,
**dadurch gekennzeichnet,**
**dass** als niedermolekulare Verbindung vorzugsweise Kohlenwasserstoff, alternativ als niedermolekulares Element Sauerstoff oder Stickstoff verwendet wird.

7. Absorber nach einem der Ansprüche 1 bis 6,
**dadurch gekennzeichnet,**
**dass** die Beschichtung (2) eine Dicke (d) von etwa 80 nm bis 140 nm, vorzugsweise 120 nm, aufweist.

8. Absorber nach einem der Ansprüche 1 bis 7,
**dadurch gekennzeichnet,**
**dass** die Oberflächenschicht (3) eine Dicke von etwa 50 nm bis 70 nm, vorzugsweise 60 nm, aufweist.

9. Vorrichtung zur Herstellung eines Absorbers gemäß Patentanspruch 1, umfassend mindestens einen Bandbeschichtungsabschnitt (4) zum Aufbringen einer optisch selektiven Beschichtung (2) mit einer über der Schichtdicke (d) variierenden Brechzahl n auf ein Trägerelement (1),
**dadurch gekennzeichnet,**
**dass** dem Bandbeschichtungsabschnitt (4) ein weiterer Bandbeschichtungsabschnitt (5) zum Aufbringen einer Oberflächenschicht (3) mit einer Brechzahl 1 < n < 1,6 auf die Beschichtung (2) nachgeschaltet ist.

10. Vorrichtung nach Anspruch 9,
**dadurch gekennzeichnet,**
**dass** die beiden Bandbeschichtungsabschnitte (4, 5) in voneinander hermetisch getrennten Kammern angeordnet sind.

11. Verfahren zur Herstellung eines Absorbers gemäß Patentanspruch 1, wobei zunächst in mindestens einem Verfahrensabschnitt auf ein Trägerelement (1) eine optisch selektive Beschichtung (2) mit über der Schichtdicke (d) variierender Brechzahl n aufgebracht wird,
**dadurch gekennzeichnet,**
**dass** in einem weiteren, nachfolgenden Verfahrensabschnitt auf die optisch selektive Beschichtung (2) eine zusätzliche Oberflächenschicht (3) mit einer Brechzahl 1 < n < 1,6 aufgebracht wird.

12. Verfahren nach Anspruch 11,
**dadurch gekennzeichnet,**
**dass** die Oberflächenschicht (3) aufgesputtert wird.
